# EUROPÄISCHE PATENTANMELDUNG

(11) **EP 1 300 616 A1**
(43) Veröffentlichungstag der Anmeldung: **09.04.2003**
(21) Anmeldenummer: 02019498.1
(22) Anmeldetag: 31.08.2002
(51) Int. Cl.: F16J 15/34, F16J 15/36

(54) **Gleitringdichtung mit axialem Spielausgleich**

(30) Priorität: 04.10.2001 DE 10148929
(71) Anmelder: Federal-Mogul Friedberg GmbH, 86316 Friedberg (DE)
(72) Erfinder: Zutz, Hans-Henning, 42929 Wermelskirchen (DE)

(57) **Zusammenfassung**

Gleitringdichtung (1, 14), insbesondere Laufwerkdichtung, umfassend einen winkelförmigen Gleit- und Gegenring (3, 23), die mit Ihren radialen Dichtschenkeln eine Dichtfläche bilden, und tellerfederförmigen, aus elastomerem Werkstoff bestehenden Dichtkörpern (6, 9, 16, 17), die zwischen dem, die Gleitringdichtung (1, 14) aufnehmenden Gehäuse (2, 15) und der radial äußeren Oberfläche der axialen Schenkel (4, 22) des Gleit- und Gegenringes (1, 14) angeordnet sind, wobei der Dichtkörper aus mindestens zwei axial hintereinander angeordneten tellerfederförmigen Dichtkörpern (6, 9, 16, 17) gebildet ist, die miteinander verbunden (10, 18) sind und die annähernd parallel zueinander angeordnet sind.

## Beschreibung

Die Erfindung beschreibt eine Gleitringdichtung, insbesondere Laufwerkdichtung, umfassend einen winkelförmigen Gleit- und Gegenring, die mit Ihren radialen Dichtschenkeln eine Dichtfläche bilden, und tellerfederförmigen, aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes angeordnet sind.

Gleitringdichtungen, insbesondere Laufwerkdichtungen, werden an Wellen und Achsen eingesetzt die betriebsbedingt starken Belastungen unterliegen. Neben diesen mechanischen Belastungen können auch thermische Einflüsse den Einsatz von herkömmlichen Dichtungen unmöglich machen. So kann es beispielsweise in Maschinen oder Anlagen zu Temperaturschwankungen kommen die eine Wärmedehnung bedingen und die ein axiales Verschieben der Dichtung erforderlich machen.

Herkömmliche Gleitringdichtungen, wie sie aus der US 4,183,542 bekannt sind, können nur sehr begrenzt axiale Verschiebungen aufnehmen. Große Wärmedehnungen in der Welle oder den Anbauteilen würden über die Dichtkörper direkt, als Flächenpressung an die Gleitringe weitergegeben werden. Diese undefinierbar hohe Flächenpressung kann zu einem erhöhten Verschleiß und letztlich zum Versagen der Gleitringdichtung führen. Lediglich über die Wahl eines geeigneten elastomeren Kunststoffes kann, unter Berücksichtigung der minimal notwendigen Flächenpressung, die Federcharakteristik und damit der axiale Spielausgleich eingestellt werden.

Eine Gleitringdichtung die von Ihrer Auslegung her eine axiale Verschiebung der Dichtung ermöglicht ist aus der DE-PS 32 02 523 bekannt. In dieser Patentschrift ist eine Gleitringdichtung beschrieben, die im wesentlichen aus einem im Bereich der Umfangsfläche kegeligen Gleitring, wo ein Rollkörper angeordnet ist, der im Einbauzustand mit einer Umfangsfläche eines radial und axial frei beweglichen Zwischenringes zusammenwirkt. Dieser Zwischenring wiederum ist im Bereich seines freien Endes elastisch abgestützt. Hierdurch soll eine bessere Anpassung der Gleitringdichtung an die Bewegungen in axialer Richtung erzielt werden.
Durch die Verwendung eines frei beweglichen Zwischenringes kann bei entsprechender Auslegung eine große axiale Bewegung der Achse oder der Welle ausgeglichen werden, ohne dass die Axialkraft, die zum Anpressen des Gleitringes an seinen korrespondierenden Gegenring erforderlich ist, spürbar nachlässt, insbesondere ohne den geforderten Toleranzbereich zu über- oder zu unterschreiten. In dieser Schrift wird weiterhin vorgeschlagen, je nach Anwendungsfall und vorhandenem axialem Bauraum mehrere Zwischenringe axial hintereinander anzuordnen.
Nachteilig bei dieser Art der Ausführung von Gleitringdichtungen ist, dass die Zwischenringe nicht geführt werden, d. h. die Zwischenringe sind somit labil gegen ein Verdrehen.

Es ist daher Aufgabe der Erfindung die oben genannten Nachteile zu überwinden und eine Gleitringdichtung zu entwickeln, die im Falle einer Wärmedehnung der Achse oder Welle eine funktionssichere Axialverschiebung ermöglicht.
Diese Aufgabe wird erfindungsgemäß durch den kennzeichnenden Teil des Patentanspruchs 1 gelöst, vorteilhafte Weiterbildungen der Erfindung sind in den Unteransprüchen dokumentiert.

Der erfindungsgemäße Gedanke überwindet die vorgenannten technischen Nachteile dadurch, dass der Dichtkörper aus mindestens zwei axial hintereinander angeordneten tellerfederförmigen Dichtkörpem gebildet ist, die miteinander verbunden sind und die annähernd parallel zueinander angeordnet sind.
Durch die erfindungsgemäße Ausgestaltung der Gleitringdichtung ist es nun möglich auch große Wärmedehnungen auszugleichen. Als große Wärmedehnungen können dabei Verschiebungen größer als 10 mm verstanden werden.

Dabei werden die Dichtkörper mit unterschiedlichen Verbindungselementen zum einen mittels eines Haltewinkels oder zum anderen mittels eines elastomeren Kunststoffes zusammengehalten.

In einer Ausführungsform der Erfindung wird vorgeschlagen, als Verbindungselement einen elastomeren Kunststoff einzusetzen, so dass der Dichtkörper die Form eines Tellerfederpacketes aufweist. Hierbei werden die einzelnen Falten aus den parallelen tellerfederförmigen Dichtkörpern und entgegengesetzt angeordneten tellerfederförmigen Verbindungselementen gebildet. Dichtkörper und Verbindungselemente können in einer ersten Variante der Erfindung als separate Teile ausgeführt sein, die über Hülsen form- oder kraftschlüssig verbunden sind.
Unter Formschluss ist das Umschließen der radial inneren und äußeren Enden eines Dichtkörpers und eines Verbindungselementes mittels einer Hülse zu verstehen, dabei werden die axialen Enden der Hülsen radial nach innen bzw. nach außen gebogen, so dass sie in die äußere Oberfläche der radialen Enden des Dichtkörpers und des Verbindungselementes eingreifen und diese formschlüssig halten.
Unter Kraftschluss ist das unlösbare Verbinden der radialen Enden des Dichtkörpers und eines Verbindungselementes mit der Hülse zu verstehen, vorstellbar ist hier zum Beispiel ein Kleben oder ein Vulkanisieren.

Ein weiterer Vorteil ergibt sich, wenn, wie in der Erfindung vorgeschlagen, die radial inneren Hülsen so ausgebildet sind, dass sie formschlüssig aber axial verschiebbar in den axialen Schenkel der Gleitringdichtung eingreifen. Vorstellbar ist hier, dass Bereiche der Hülse, die auch aus Blech gefertigt sein kann, abgewinkelt werden, so dass sie in korrespondierende Nuten der axialen Schenkel eingreifen können. Durch diese Art des Eingreifens der Hülse in den axialen Schenkel des Gleit- bzw. Gegenringes wird ein relatives Verdrehen der Gleitringpartner zueinander vermieden.

Die Federcharakteristik der Dichtkörper ist erfindungsgemäß dadurch einstellbar, dass beliebig viele Dichtkörper und Verbindungselemente hintereinander angeordnet werden, wobei zu beachten bleibt, dass die Neigung des ersten Dichtkörpers am Gleitring stets mit der Neigung des letzten Dichtkörpers am Gehäuse übereinstimmt, somit können Federweg und Federspannung individuell abgestimmt werden.

Vornehmlich stimmen die Wanddicke der Dichtkörper und der Verbindungselemente überein. In einer weiteren Ausführungsform der Erfindung wird vorgeschlagen, dass die Wanddicke der Dichtkörper und Verbindungselemente variieren kann, ausgehend von der Dichtfläche der Gleitringe kann die Wanddicke kontinuierlich zu oder auch abnehmen. Dabei ist eine kontinuierliche Veränderung nicht zwingend erforderlich, es können auch je nach Anwendungsfall breite Dichtkörper und schmale Verbindungsstege bzw. schmale Dichtkörper und breite Verbindungsstege zum Einsatz kommen.
Bei der Auslegung des Gleitringes spielt die Wanddicke der Dichtkörper und Verbindungselemente eine entscheidende Rolle, aus fertigungstechnischen Vorteilen können Dichtkörper und Verbindungselement aber auch einstückig ausgebildet sein.

In einer weiteren Ausführungsform der Erfindung wird vorgeschlagen, als Verbindungselement einen mehrfach abgewinkelten Haltekörper einzusetzen. Der Haltekörper besteht vorzugsweise aus einem metallischen Werkstoff kann aber auch aus einem Kunststoff gefertigt sein.
Dabei verbindet der Haltewinkel in einer Ausführung das radial äußere Ende des gleit- bzw. gegenringseitigen Dichtkörpers mit dem radial inneren Ende des gehäuseseitigen Dichtkörpers, wobei der Haltewinkel die Enden umschließt. Je nach konstruktiver Gegebenheit und Größe des auszugleichenden axialen Spiels können dabei auch mehrere Haltekörper hintereinander angeordnet werden. Die Befestigung des Dichtkörpers kann form- wie auch kraftschlüssig erfolgen, wobei die kraftschlüssige Verbindung beispielsweise mittels eines Vulkanisierens oder eines Klebens erfolgt.

Um die Labilität des Dichtkörpers, insbesondere bei Anwendungen mit großem axialem Spielausgleich, zu minimieren wird in der Erfindung vorgeschlagen an den radial inneren Haltewinkeln Stege auszubilden, die in korrespondierende Nuten der Gleit- bzw. Gegenringe formschlüssig aber axial verschiebbar eingreifen.

Zur weiteren Stabilisierung des Dichtkörpers am Gleitring kann an die axialen Schenkel eine ringförmige Nut eingearbeitet sein. Die Nut dient zur formschlüssigen Aufnahme des gleitringseitigen Dichtkörpers und sichert diesen gegen ein Verschieben in axiale Richtung.

Erfindungsgemäße Gestaltungsbeispiele des Dichtringes werden nachstehend anhand von Zeichnungen und im weiteren in der Beschreibung näher erläutert. Es zeigen:
- Figur 1: einen Schnitt durch ein erfindungsgemäßes Ausführungsbeispiel einer Gleitringdichtung mit elastomerem Verbindungselement und
- Figur 2: einen Schnitt durch ein erfindungsgemäßes Ausführungsbeispiel einer Gleitringdichtung mit einem abgewinkelten Haltekörper als Verbindungselement.

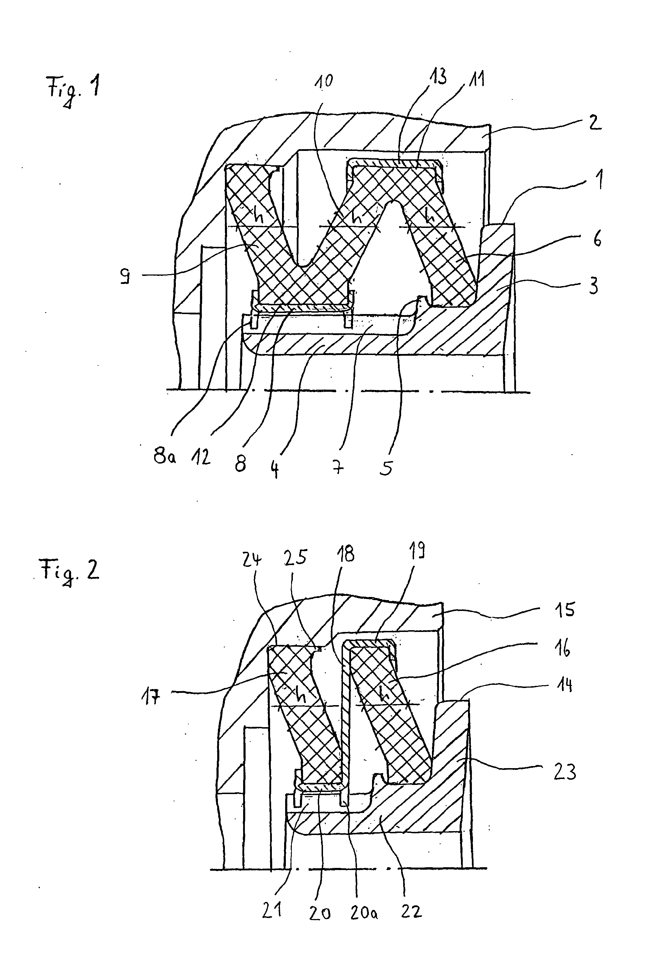

Figur 1 zeigt den Schnitt durch eine erfindungsgemäße Gleitringdichtung 1, die in einem Gehäuse 2 montiert ist. Der Gleit- bzw. Gegenring 3 besitzt an seinem axialen Schenkel 4 einen Steg 5 zur Aufnahme des gleitringseitigen Dichtkörpers 6 und eine Nut 7 in die die radial inneren Hülsen 8 formschlüssig 8a eingreifen. In diesem Ausführungsbeispiel ist der Dichtkörper 6, 9 einstückig mit dem Verbindungselement 10 verbunden und Dichtkörper 6, 9 wie auch Verbindungselement 10 besitzen die gleiche Wandstärke h. Durch die Anordnung von Dichtkörper 6, 9 und Verbindungselement 10 entsteht die Form eines Faltenbalges, wobei die radial äußeren 11 und inneren 12 Enden der Falten von Hülsen 8, 13 umschlossen sind.

Figur 2 zeigt die Gleitringdichtung 14 in einem Gehäuse 15, dabei werden die beiden parallel angeordneten tellerfederförmigen Dichtkörper 16, 17 mittels eines Haltewinkels 18 verbunden. Der Haltewinkel umschließt gleitringseitig das radial äußere Ende 19 und gehäuseseitig das radial innere Ende 20 der Dichtkörper 16, 17, wobei er am radial inneren Ende 20 gleichzeitig formschlüssig 20a in die korrespondierende Nut 21 des axialen Schenkels 22 des Gleit- bzw. Gegenringes 23 eingreift. In diesem Ausführungsbeispiel ist der Haltewinkel 18 rechtwinkelig gefertigt, er kann aber je nach geometrischer Gegebenheit auch andere Winkel erhalten.
An den gehäuseseitigen Dichtkörper 17 ist an das radial äußere Ende 24 eine Haltelippe 25 angeformt, die den Dichtkörper 17 gegen ein Herausfallen sichert.

## Patentansprüche

1. Gleitringdichtung (1, 14), insbesondere Laufwerkdichtung, umfassend einen winkelförmigen Gleit- und Gegenring (3, 23), die mit Ihren radialen Dichtschenkeln eine Dichtfläche bilden, und tellerfederförmigen, aus elastomerem Werkstoff bestehenden Dichtkörpern (6, 9, 16, 17), die zwischen dem, die Gleitringdichtung (1, 14) aufnehmenden Gehäuse (2, 15) und der radial äußeren Oberfläche der axialen Schenkel (4, 22) des Gleit- und Gegenringes (1, 14) angeordnet sind, **dadurch gekennzeichnet, dass** der Dichtkörper aus mindestens zwei axial hintereinander angeordneten tellerfederförmigen Dichtkörpem (6, 9, 16, 17) gebildet ist, die miteinander verbunden (10, 18) sind und die annähernd parallel zueinander angeordnet sind.

2. Gleitringdichtung nach Anspruch 1, **dadurch gekennzeichnet, dass** das Verbinden der Dichtkörper (6, 9, 16, 17) mittels eines Verbindungselementes (10) vorgenommen ist, wobei das Verbindungselement (10) ein elastomerer Kunststoff ist, so dass der Dichtkörper die Form eines Faltenbalges aufweist, der an dem radial äußeren Ende (11) der Falten mit einer Hülse (13) versehen ist, die das radial äußere Ende (11) der Falten umschließt und an seinem radial inneren Ende (12) mit einer Hülse (8) versehen ist, die das radial innere Ende (12) der Falten umschließt und dass die innere Hülse (12) formschlüssig (8a) mit dem axialen Schenkel (4) des Gleit- bzw. Gegenringes (3) verbunden ist.

3. Gleitringdichtung nach einem der Ansprüche 1 und 2, **dadurch gekennzeichnet, dass** die Wanddicke (h) der Dichtkörper (6, 9) mit der Wanddicke (h) der Verbindungselemente (10) übereinstimmt.

4. Gleitringdichtung nach einem der Ansprüche 1 bis 3, **dadurch gekennzeichnet, dass** die Wanddicke (h) der Dichtkörper (6, 9) und Verbindungselemente (10) variiert.

5. Gleitringdichtung nach einem der Ansprüche 1 bis 4, **dadurch gekennzeichnet, dass** Dichtkörper (6, 9) und Verbindungselement (10) einstückig ausgeformt sind.

6. Gleitringdichtung nach einem der Ansprüche 1 bis 5, **dadurch gekennzeichnet, dass** die Hülsen (8, 13) kraftschlüssig, insbesondere mittels eines Vulkanisierens oder Klebens, mit dem Dichtkörper verbunden sind.

7. Gleitringdichtung nach Anspruch 1, **dadurch gekennzeichnet, dass** das Verbinden der Dichtkörper (16, 17) mittels eines Verbindungselementes vorgenommen ist und das Verbindungselement ein mehrfach abgewinkelter Haltekörper (18) ist, wobei mindestens ein Haltekörper (18) vorgesehen ist.

8. Gleitringdichtung nach einem der Ansprüche 1 und 7, **dadurch gekennzeichnet, dass** der Haltekörper (18) kraftschlüssig, insbesondere mittels eines Vulkanisierens oder Klebens, mit den Dichtkörpern (16, 17) verbunden ist.

9. Gleitringdichtung nach einem der Ansprüche 1 bis 8, **dadurch gekennzeichnet, dass** an den axialen Schenkeln (4, 22) des Gleit- bzw. Gegenringes (3, 23) radial nach außen gerichtete Stege (5) ausgebildet sind, so dass eine ringförmige Nut gebildet ist, in die der Dichtkörper (6, 16) formschlüssig eingreift.

10. Gleitringdichtung nach einem der Ansprüche 1 bis 9, **dadurch gekennzeichnet, dass** an den axial letzten Dichtkörper (9, 17), der zur Aufnahme in das Gehäuse (2, 15) dient, eine radial nach außen geneigte lippenförmige Verlängerung (25) angeformt ist, die in Richtung der Dichtfläche weist und als Haltelippe fungiert.

11. Gleitringdichtung nach einem der Ansprüche 1 bis 10, **dadurch gekennzeichnet, dass** mehrere Dichtkörper (6, 9, 16, 17) hintereinander angeordnet sind, die mit einem Verbindungselement (10, 18) verbunden sind, wobei die Orientierung der Neigung des axial ersten Dichtkörpers (6, 16) mit der Orientierung der Neigung des axial letzten Dichtkörpers (9, 17) identisch ist.

12. Gleitringdichtung nach einem der Ansprüche 1 bis 11, **dadurch gekennzeichnet, dass** in den axialen Schenkeln (4, 22) des Gleit- bzw. Gegenringes (3, 23) korrespondierende Nuten (7, 21) vorgesehen sind, in die die Hülsen (8) bzw. die Haltekörper (18) formschlüssig (8a, 20a) eingreifen.
